Europäisches Patentamt

European Patent Office

Office européen des brevets

(19)

(11)  **EP 0 887 211 B1**

(12)  **EUROPEAN PATENT SPECIFICATION**

(45)  Date of publication and mention
of the grant of the patent:
**02.01.2003   Bulletin 2003/01**

(51)  Int Cl.$^7$:  **B60C 23/06**

(21)  Application number: **97110222.3**

(22)  Date of filing: **23.06.1997**

(54)  **Tire monitoring system**

Reifen-Überwachungssystem

Système de surveillance de pneumatiques

(84)  Designated Contracting States:
**DE ES FR GB IT**

(43)  Date of publication of application:
**30.12.1998   Bulletin 1998/53**

(73)  Proprietor: **COMPAGNIE GENERALE DES
ETABLISSEMENTS MICHELIN-MICHELIN & CIE
63040 Clermont-Ferrand Cédex (FR)**

(72)  Inventors:
• **François, Jean Pierre
  63540 Romagnat (FR)**
• **Rey, Norman Walter
  63540 Romagnat (FR)**

• **Albertson, Robert Jeffrey
  63040 Clermont Ferrand Cedex 1 (FR)**

(74)  Representative:
**Dequire, Philippe Jean-Marie Denis
Michelin & Cie,
Service SGD/LG/PI-LAD
63040 Clermont Ferrand Cedex 9 (FR)**

(56)  References cited:
**EP-A- 0 197 813          EP-A- 0 641 679
WO-A-90/05646          WO-A-93/25400
GB-A- 2 307 044          US-A- 4 578 992**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to pneumatic tires for vehicles and in particular to a system for monitoring tires by monitoring their deflection.

The benefits of using proper inflation pressures in tires are many. With proper tire inflation pressures one can optimize tread wear, rolling resistance, road hazard resistance, casing life and traction of the tire and handling of the vehicle. It is usual for passenger tires to use only one or two tire pressures whatever may be the conditions of use of the vehicle. This is not the case for truck tires for which the recommended pressure varies in function of the load on the tires. So monitoring the tire air pressure can be not enough to obtain an optimum tire performance.

Monitoring the air pressure of a tire by monitoring a tire deformation is disclosed in EP 0,641,679. In this Patent Application is presented a device comprising:

- a sensor operatively arranged with respect to the tire for delivering an electrical pulse during a footprint pass corresponding to a deformation of the tire;
- an evaluating unit arranged in the vehicle for receiving said signal from the sensor, with calculation means determining the degree of deformation as a function of a ratio of a duration of the electrical pulse to a duration of one tire revolution;

wherein said sensor is a bending or extension sensor disposed in a tire sidewall. The evaluating unit gives an estimate of the tire pressure by way of tables.

In this device, the sensor delivers one electrical pulse per revolution of the tire; the shape of an electrical pulse is a flank that initially rises up to maximum amplitude with a finite steepness and then drops off again with the same slope and the duration of the electrical pulse is determined by the time within which pulse has an amplitude greater than a threshold. So this determination is not very accurate because of all the usual fluctuations of the signals. Moreover, because large deflections occur in the sidewall area, this sensor is subject to large cyclic strains and may be prone to fatigue failures.

The document WO 98/56606 has been published after the filing date of the present application but has a priority date anterior to the present filing date of the present application. This document discloses a tire monitoring device comprising a sensor sensitive to acceleration implanted with its electronic package in the tire running tread or in the proximity thereof; coupling means transmitting to the vehicle indications obtained from the sensor; and power supply means.

The present invention improves the accuracy of the determination of the tire deformation in order to be able to monitor the tire with a quite efficient tire parameter. The above object is accomplished according to the present invention by a tire monitoring system as disclosed herein.

The present invention concerns a tire monitoring system for a tire on a vehicle comprising:

- a sensor device operatively arranged with respect to the tire to create an electrical pulse during the footprint pass corresponding to a deformation of the tire;
- means for calculating a ratio of the duration of said electrical pulse to the duration of one tire revolution;
- means for transmitting said ratio to an evaluating unit placed in the vehicle;

characterized in that said sensor device is placed within the tread area of said tire in order that said electrical pulse presents a first maximum at the entrance and a second maximum at the leaving of said footprint pass.

The position of the sensor device within the tread area provides an accurate determination of the first and of the second maxima at the entrance and the leaving of the footprint pass. Accordingly, the ratio calculated of the duration $t_1$ of the electrical pulse to the duration $t_2$ of one tire revolution is proportional to the angular value of a contact length cord and is directly related to an estimation of the relative tire deflection:

$$f = (1 - \cos(\frac{\pi \times t_1}{t_2})) \times 100$$

The system according to the invention aim at monitoring not the tire pressure but the tire deflection in order to obtain an optimum performance particularly for truck tires. In fact, tire deflection is a tire parameter which is more critical for good tire performance than having a predetermined inflation pressure.

The present invention concerns also a tire monitoring system for a tire on a vehicle comprising:

- a sensor device operatively arranged with respect to the tire to create an electrical pulse during the footprint pass;
- means for transmitting said electrical pulse to an evaluating unit placed in the vehicle;
- said evaluating unit having means for calculating a ratio of the duration of said electrical pulse to the duration of one tire revolution;

characterized in that said sensor device is placed within the tread area of said tire in order that said electrical pulse presents a first maximum at the entrance and a second maximum at the leaving of said footprint pass.

The invention will be more readily understood from a reading of the following specification and by a reference to the accompanying drawings forming a part thereof, wherein an example of the invention is shown and wherein:

- Figure 1a is a side elevation view of a tire showing the general location of a sensor device within a tire adjacent to a reference point on the contact surface of the tire;
- Figure 1b is a section through the tire along line A-A in Fig. la showing the sensor and calculating and transmitting means locations;
- Figure 2 is a general block diagram of the monitoring system used to carry out this invention except claim 4 for contracting state ES, and
- Figure 3 is a plot of a typical output electrical signal from an accelerometer sensor as a function of time as the sensor passes through the contact patch.

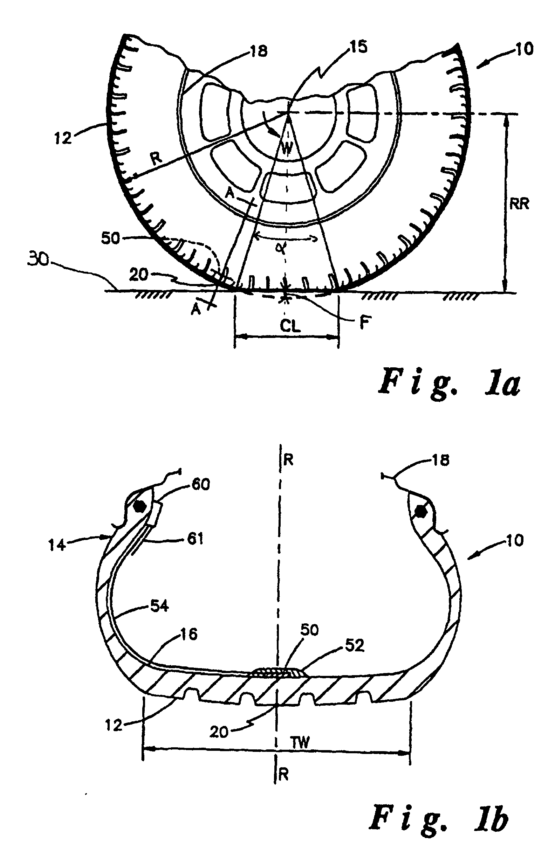

The Figure 1a shows a tire 10 mounted on a wheel 18 in contact with a ground surface with a rotational velocity W. This tire 10 has an outer tread surface 12. The contact between the tire and the ground surface is the contact area with a contact length CL and a contact width TW (figure 1b). The tire 10 has a radius R out of the contact area and a radius RR at the middle of the contact length corresponding to its rolling radius. The tire deflection F is the difference between R and RR. This tire deflection F can be calculated by:

$$F = R \times (1 - \cos(\alpha/2))$$

where $\alpha$ is the angular cord of the contact length, and the relative tire deflection $f$ expressed in per cent is:

$$f = F/R = (1-\cos(\alpha/2)) \times 100$$

The tire deflection and the relative tire deflection are very sensitive to the tire load and air pressure. A good monitoring of F and/or $f$ is essential for optimum tire performance because the tires are designed to be used in precise deflection ranges.

When the tire 10 rolls over the ground surface 30 with a rotational speed W, the ratio of the duration of the time $t_1$ spent by a reference point 20 during the footprint pass to the duration of the time $t_2$ of one tire revolution is proportional to $\alpha$. So:

$$f = (1 - \cos(\frac{\pi \times t_1}{t_2})) \times 100.$$

A tire cross-section taken along line A-A in Fig. 1a is illustrated in Fig. 1b. A sensor device 50 is positioned near the radial plane R-R of the tire on an inside surface 16 of the tire 10. Preferably the sensor device 50 is protected by a rubber patch 52 on the inside surface 16 of the tire. The reference point 20 is adjacent the sensor device on the external surface 12 of the tire's tread at the radial plane.

A sensor device 50 used to provide a signal for estimating tire contact length CL can comprise one of several different types, including but not limited to:

1) an extensometer whose output signal is a measure of the flexion or the bending of the inner surface of the tread's tire; such extensometer can be a piezoelectric polymer, which consists of a piece of polymer which was manufactured in such a way as to contain aligned dipolar molecules which cause an electrical charge potential when the polymer is strained; a photorestrictive fiber optic cable connecting a light emitting diode and a photocell, which modulates the amount of light received by the photocell when the fiber optic cable is bent normal to its longitudinal axis; a variable capacitor made from aluminized mylar, whose capacitance changes as a function of stress; and a variable inductor sensor, consisting of an inductive coil whose inductance changes or whose coupling between two inductive coils changes as a result of sensor strain. The preferred embodiment of the extensometer sensor device consists of the piezoelectric polymer which strains as a result of the tread bending or flexing as it enters and exits the contact patch;
2) an accelerometer; this sensor device measures the intensity of the acceleration supported by the tread.

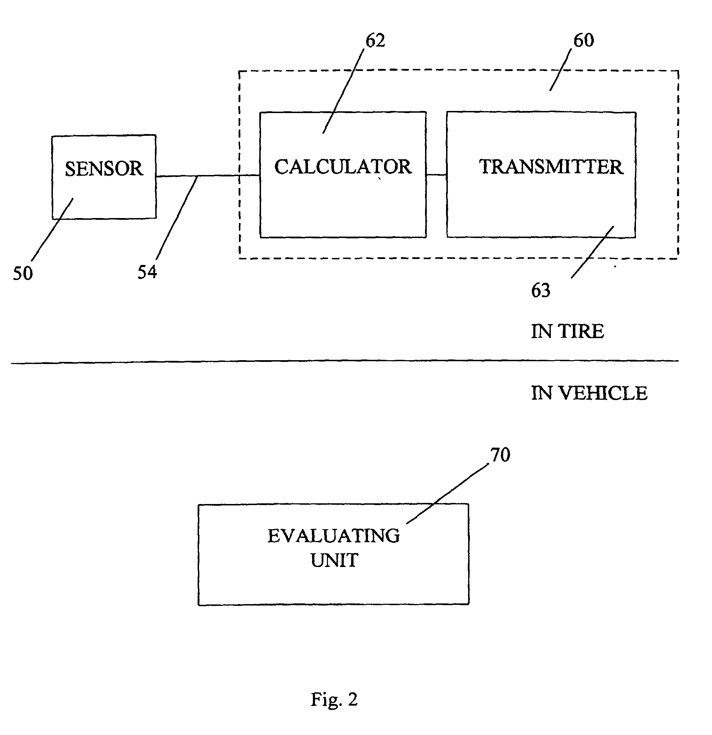

Fig. 2 presents a simplified block diagram of the tire monitoring system. As the sensor device 50 strains, it generates a continuous electrical signal which is transmitted to calculating means 62 in order to calculate the ratio $t_1/t_2$ and the estimation of the relative tire deflection f. These values are then periodically transmitted by transmitter means 63 to the evaluating unit 70 placed in the vehicle. This evaluating unit displays an alarm to the vehicle driver when, for instance, the value of the estimation of the relative tire deflection is out of a given range.

In the embodiment presented in Fig. 1b, the sensor device 50 and an electronic package 60 are both within the tire. The electronic package comprises the calculating and transmitting means which can be more sensitive than the sensor device to fatigue. These components are positioned near the bead area 14 of the tire. The bead area provides a stable environment to limit cyclic fatigue of these components remote from the sensor device. A lead wire 54 electrically connects the sensor device with these low life-cycle components. Other connection means are also within the scope of this invention, including wireless connections. The transmitter means can have an antenna 61 for radio frequency transmissions positioned near the bead area 14.

It is also possible to design a compact sensor device which would comprise all of the electronic components necessary for sensing, conditioning, calculating and transmitting. Most of these components can for instance be placed in an ASIC.

According to another embodiment, the sensor device comprises processing means which can provide the durations $t_1$ and $t_2$ and transmit them periodically to the evaluating unit. This evaluating unit processes then these durations to give the values of $t_1/t_2$ and/or $f$ and display an alarm if necessary.

The calculating means and/or the evaluating unit can also determine the wheel velocity, the number of tire revolutions in a given monitoring time and/or the total number of tire revolutions. These parameters can help to monitor the fatigue life of the tire.

This information can be displayed in the vehicle cabin for the driver's immediate use, or as a warning in the case of a low pressure, high load and high speed situations, or as an input into a vehicle central tire inflation system (CTIS).

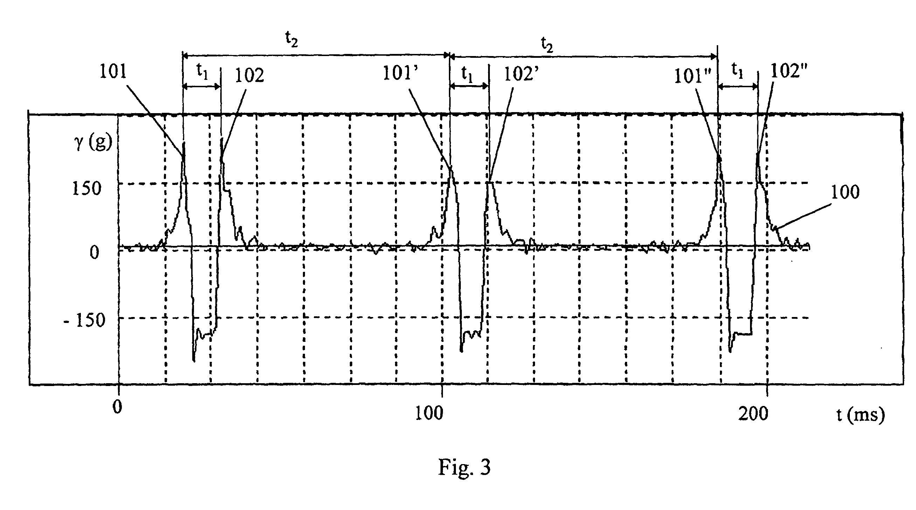

A passenger car BMW 735 with 225-55 ZR 16 tires has been equipped with a tire monitoring system according to the invention. Figure 3 is a diagram of an exemplary electronic signal curve 100 obtained from an accelerometer sensor device at a speed of 100 km/h and a tire pressure of 1 bar. There are large accelerations measured by the sensor device as the reference point enters contact with the ground surface. Taking as reference the acceleration measured out of the contact area, the accelerations produces an electrical pulse having a first maximum 101, 101', 101" at the entrance of the footprint pass and a second maximum 102, 102', 102" at the leaving of the footprint pass, the relative values of these maxima are about 200 g. Between these two maxima, the recorded relative output signal is about - 200 g corresponding to the flattening of the tread in the contact area. In fact, the absolute acceleration during the contact area could be considered as a reference as close to zero.

These two maxima are directly related with the duration of the footprint pass and with the length of the contact area, and are easy to identify. Accordingly, it is easy to measure the duration $t_1$ of the electrical pulse in the contact area and the duration $t_2$ of one tire revolution and to deduce from it a good dynamic estimation of the relative deflection $f$.

A curve obtained with an extensometer of the above types would be very similar.

## Claims

### Claims for the following Contracting States : DE, FR, GB, IT

1. A tire monitoring system for a tire (10) on a vehicle comprising:

   - a sensor device (50) placed within the tread area (16) of said tire (10) to create an electrical pulse during the footprint pass corresponding to a deformation of the tire, wherein said electrical pulse presents a first maximum at the entrance and a second maximum at the leaving of said footprint pass;

   - an electronic package (60) placed within the bead area (14) of the tire comprising means (62) for calculating a ratio of the duration of said electrical pulse to the duration of one tire revolution and means (63) for transmitting said ratio to an evaluating unit (70) placed in the vehicle; and

   - means (54) for connecting the sensor device (50) and the electronic package (60).

2. A tire monitoring system as set forth in claim 1, wherein said means for connecting the sensor device (50) and the electronic package (60) are a lead wire (54).

3. A tire monitoring system as set forth in claim 1 or 2, wherein said transmitter means (63) comprises an antenna (61) for radio frequency transmissions.

4. A tire monitoring system as set forth in one of claims 1 to 3, wherein said sensor device (50) comprises processing means for providing the duration of the electrical pulse and the duration of one tire revolution.

5. A tire monitoring system as set forth in one of claims 1 to 4, said system displays an alarm when said ratio of the duration of said electrical pulse to the duration of one tire revolution obeys a given relationship.

6. A tire monitoring system as set forth in one of claims 1 to 5, wherein said sensor device (50) is a extensometer.

7. A tire monitoring system as set forth in one of claims 1 to 5, wherein said sensor device (50) is an accelerometer.

### Claims for the following Contracting State : ES

1. A tire monitoring system for a tire (10) on a vehicle comprising:

   - a sensor device (50) operatively arranged with respect to the tire (10) to create an electrical pulse during the footprint pass corresponding to a deformation of the tire;

   - means (62) for calculating a ratio of the duration of said electrical pulse to the duration of one tire revolution;

- means (63) for transmitting said ratio to an evaluating unit placed in the vehicle;

**characterized in that** said sensor device (50) is placed within the tread area (16) of said tire in order that said electrical pulse presents a first maximum at the entrance and a second maximum at the leaving of said footprint pass.

2. A tire monitoring system as set forth in claim 1, wherein said means (62, 63) for calculating and transmitting are removed from said sensor device (50) within the tire (10).

3. A tire monitoring system as set forth in claim 2, wherein said means (62, 63) for calculating and transmitting are placed within the bead area (14) of the tire.

4. A tire monitoring system for a tire (10) on a vehicle comprising:

   - a sensor device (50) operatively arranged with respect to the tire (10) to create an electrical pulse during the footprint pass;
   - means (63) for transmitting said electrical pulse to an evaluating unit (70) placed in the vehicle;
   - said evaluating unit (70) having means (62) for calculating a ratio of the duration of said electrical pulse to the duration of one tire revolution;

   **characterized in that** said sensor device (50) is placed within the tread area (14) of said tire in order that said electrical pulse presents a first maximum at the entrance and a second maximum at the leaving of said footprint pass.

5. A tire monitoring system as set forth in one of claims 1 to 4, wherein said transmitter means (63) comprises an antenna (61) for radio frequency transmissions.

6. A tire monitoring system as set forth in one of claims 1 to 5, wherein said sensor device (50) comprises processing means for providing the duration of the electrical pulse and the duration of one tire revolution.

7. A tire monitoring system as set forth in one of claims 1 to 6, wherein said sensor device (50) is positioned on the inside surface (16) of said tire.

8. A tire monitoring system as set forth in one of claims 1 to 7, wherein said system displays an alarm when said ratio of the duration of said electrical pulse to the duration of one tire revolution obeys a given relationship.

9. A tire monitoring system as set forth in one of claims 1 to 8, wherein said sensor device (50) is a extensometer.

10. A tire monitoring system as set forth in one of claims 1 to 8, wherein said sensor device (50) is an accelerometer.

**Patentansprüche**

**Patentansprüche für folgende Vertragsstaaten : DE, FR, GB, IT**

1. Reifenüberwachungssystem für einen Reifen (10) an einem Fahrzeug, mit:

   - einer Meßfühlervorrichtung (50), die innerhalb des Abdruckbereiches (16) des genannten Reifens (10) angeordnet ist, um einen elektrischen Impuls während des Abdruck-Durchlaufes entsprechend einer Verformung des Reifens zu erzeugen, wobei der genannte elektrische Impuls ein erstes Maximum am Einlauf in den und ein zweites Maximum beim Auslauf aus dem genannten Abdruck-Durchlauf aufweist;
   - einer elektronischen Baugruppe (60), die innerhalb des Wulstbereiches (14) des Reifens angeordnet ist, mit Mitteln (62) zum Errechnen eines Verhältnisses der Dauer des genannten elektrischen Impulses zur Dauer einer Reifenumdrehung sowie Mitteln (63) zum Übertragen des genannten Verhältnisses an eine Berechnungseinheit (70), die im Fahrzeug angeordnet ist; und
   - Mitteln (54) zum Anschließen der Meßfühlervorrichtung (50) an die elektronische Baugruppe (60).

2. Reifenüberwachungssystem nach Anspruch 1, worin die genannten Mittel zum Anschließen der Meßfühlervorrichtung (50) an die elektronische Baugruppe (60) ein Leitungsdraht (54) sind.

3. Reifenüberwachungssystem nach Anspruch 1 oder 2, worin die genannten Übertragungsmittel (63) eine Antenne (61) für Hochfrequenzübertragungen aufweisen.

4. Reifenüberwachungssystem nach Anspruch 1 bis 3, worin die genannte Meßfühlervorrichtung (50) Verarbeitungsmittel aufweist, um die Dauer des elektrischen Impulses und die Dauer einer Reifenumdrehung zu liefern.

5. Reifenüberwachungssystem nach Anspruch 1 bis 4, worin das genannte System einen Alarm anzeigt, wenn das genannte Verhältnis der Dauer des genannten elektrischen Impulses zur Dauer einer Reifenumdrehung einer vorgegebenen Zuordnung entspricht.

6. Reifenüberwachungssystem nach Anspruch 1 bis 5, worin die genannte Meßfühlervorrichtung (50) ein Dehnungsmeßfühler bzw. Extensometer ist.

7. Reifenüberwachungssystem nach Anspruch 1 bis 5, worin die genannte Meßfühlervorrichtung (50) ein Beschleunigungsmeßfühler bzw. Akzelerometer ist.

**Patentansprüche für folgenden Vertragsstaat : ES**

1. Reifenüberwachungssystem für einen Reifen (10) an einem Fahrzeug, mit:

   - einer Meßfühlervorrichtung (50), die betrieblich dem Reifen (10) zugeordnet ist, um einen elektrischen Impuls während des Abdruck-Durchlaufes entsprechend einer Verformung des Reifens zu erzeugen;
   - Mitteln (62) zum Errechnen eines Verhältnisses der Dauer des genannten elektrischen Impulses zur Dauer einer Reifenumdrehung; und
   - Mitteln (63) zum Übertragen des genannten Verhältnisses an eine Berechnungseinheit, die im Fahrzeug angeordnet ist;

   **dadurch gekennzeichnet, daß** die genannte Meßfühlereinheit (50) innerhalb des Auflagebereiches (16) des genannten Reifens angeordnet ist, damit der genannte, elektrische Impuls ein erstes Maximum beim Einlauf in den und ein zweites Maximum beim Auslauf aus dem genannten Abdruck-Durchlauf aufweist.

2. Reifenüberwachungssystem nach einem der Ansprüche 1 oder 2, worin die genannten Mittel (62, 63) zum Berechnen und Übertragen von der genannten Meßfählervorrichtung (50) im Inneren des Reifens (10) abgesetzt sind.

3. Reifenüberwachungssystem nach Anspruch 3, worin die genannten Mittel (62, 63) zum Berechnen und Übertragen innerhalb des Wulstbereiches (14) des Reifens angeordnet sind.

4. Reifenüberwachungssystem für einen Reifen (10) an einem Fahrzeug, mit:

   - einer Meßfühlervorrichtung (50), die betrieblich dem Reifen (10) zugeordnet ist, um einen elektrischen Impuls während des Abdruck-Durchlaufes zu erzeugen;

   - Mitteln (63) zum Übertragen des genannten Verhältnisses an eine Berechnungseinheit (70), die im Fahrzeug angeordnet ist;

   wobei die genannte Berechnungseinheit (70) Mittel (62) zum Errechnen eines Verhältnisses der Dauer der genannten elektrischen Impulse zur Dauer einer Reifenumdrehung aufweist;
   **dadurch gekennzeichnet, daß** die genannte Meßfühlereinheit (50) innerhalb des Auflagebereiches (14) des genannten Reifens angeordnet ist, damit der genannte, elektrische Impuls ein erstes Maximum beim Einlauf in den und ein zweites Maximum beim Auslauf aus dem genannten Abdruck-Durchlauf aufweist.

5. Reifenüberwachungssystem nach Anspruch 1 bis 4, worin die genannten Übertragungsmittel (63) eine Antenne (61) für Hochfrequenzübertragungen aufweisen.

6. Reifenüberwachungssystem nach Anspruch 1 bis 4, worin die genannte Meßfühlereinrichtung (50) Verarbeitungsmittel aufweist, um die Dauer des elektrischen Impulses und die Dauer einer Reifenumdrehung zu liefern.

7. Reifenüberwachungssystem nach Anspruch 1 bis 6, worin die genannte Meßfühlervorrichtung (50) auf der innenseitigen Oberfläche (16) des genannten Reifens angeordnet ist.

8. Reifenüberwachungssystem nach Anspruch 1 bis 7, worin das genannte System einen Alarm anzeigt, wenn das genannte Verhältnis der Dauer des genannten elektrischen Impulses zur Dauer einer Reifenumdrehung einer vorgegebenen Zuordnung entspricht.

9. Reifenüberwachungssystem nach Anspruch 1 bis 8, worin die genannte Meßfühlervorrichtung (50) ein Dehnungsmeßfühler bzw. Extensometer ist.

10. Reifenüberwachungssystem nach Anspruch 1 bis 8, worin die genannte Meßfühlervorrichtung (50) ein Beschleunigungsmeßfühler bzw. Akzelerometer ist.

**Revendications**

**Revendications pour les Etats contractants suivants : DE, FR, GB, IT**

1. Système de surveillance de pneu pour un pneu (10) sur un véhicule, comprenant :

- un dispositif capteur (50) placé à l'intérieur de la zone de bande de roulement (16) dudit pneu (10) dans le but de créer une impulsion électrique, pendant la durée du passage dans l'aire de contact, correspondant à une déformation du pneu, ladite impulsion électrique présentant un premier maximum à l'entrée, et un deuxième maximum à la sortie de ladite aire de contact ;
- un boîtier électronique (60) placé à l'intérieur de la zone de talon (14) du pneu comprenant un moyen (62) de calcul d'un rapport entre la duré de ladite impulsion électrique et la durée d'un tour de pneu, et un moyen (63) de transmission dudit rapport à une unité d'évaluation (70) placée dans le véhicule ; et
- un moyen (54) de connexion du dispositif capteur (50) et du boîtier électronique (60).

2. Système de surveillance de pneu selon la revendication 1, dans lequel ledit moyen de connexion du dispositif capteur (50) et du boîtier électronique (60) est un fil conducteur (54).

3. Système de surveillance de pneu selon la revendication 1 ou 2, dans lequel ledit moyen de transmission (63) comprend une antenne (61) pour les transmissions radioélectriques.

4. Système de surveillance de pneu selon l'une des revendications 1 à 3, dans lequel ledit dispositif capteur (50) comprend un moyen de traitement pour fournir la durée de l'impulsion électrique et la durée d'un tour de pneu.

5. Système de surveillance de pneu selon l'une des revendications 1 à 4, ledit système affichant une alarme lorsque ledit rapport entre la durée de ladite impulsion électrique et la durée d'un tour de pneu obéit à une relation donnée.

6. Système de surveillance de pneu selon l'une des revendications 1 à 5, dans lequel ledit dispositif capteur (50) est un extensomètre.

7. Système de surveillance de pneu selon l'une des revendications 1 à 5, dans lequel ledit dispositif capteur (50) est un accéléromètre.

**Revendications pour l'Etat contractant suivant : ES**

1. Système de surveillance de pneu pour un pneu (10) sur un véhicule, comprenant :

- un dispositif capteur (50) disposé de manière fonctionnelle par rapport au pneu (10) dans le but de créer une impulsion électrique, pendant la durée du passage dans l'aire de contact, correspondant à une déformation du pneu ;
- un moyen (62) de calcul d'un rapport entre la durée de ladite impulsion électrique et la durée d'un tour de pneu ;
- un moyen (63) de transmission dudit rapport à une unité d'évaluation placée dans le véhicule ;

**caractérisé en ce que** ledit dispositif capteur (50) est placé à l'intérieur de la zone de bande de roulement (16) dudit pneu de façon à ce que ladite impulsion électrique présente un premier maximum à l'entrée et un deuxième maximum à la sortie de ladite aire de contact.

2. Système de surveillance de pneu selon la revendication 1, dans lequel lesdits moyens (62, 63) de calcul et de transmission sont retirés dudit dispositif capteur (50) à l'intérieur du pneu (10).

3. Système de surveillance de pneu selon la revendication 2, dans lequel lesdits moyens (62, 63) de calcul et de transmission sont placés à l'intérieur de la zone de talon (14) du pneu.

4. Système de surveillance de pneu pour un pneu (10) sur un véhicule, comprenant :

- un dispositif capteur (50) disposé de manière fonctionnelle par rapport au pneu (10) dans le but de créer une impulsion électrique pendant la durée du passage dans l'aire de contact ;
- un moyen (63) de transmission de ladite impulsion électrique à une unité d'évaluation (70) placée dans le véhicule ;
- ladite unité d'évaluation (70) comportant un moyen (62) de calcul d'un rapport entre la durée de ladite impulsion électrique et la durée d'un tour de pneu ;

**caractérisé en ce que** ledit dispositif capteur (50) est placé à l'intérieur de la zone de bande de roulement (14) dudit pneu de façon à ce que ladite impulsion électrique présente un premier maximum à l'entrée et un deuxième maximum à la sortie de ladite aire de contact.

5. Système de surveillance de pneu selon l'une des revendications 1 à 4, dans lequel ledit moyen de transmission (63) comprend une antenne (61) pour les transmissions radioélectriques.

6. Système de surveillance de pneu selon l'une des revendications 1 à 5, dans lequel ledit dispositif capteur (50) comprend un moyen de traitement pour fournir la durée de l'impulsion électrique et la durée d'un tour de pneu.

7. Système de surveillance selon l'une des revendications 1 à 6, dans lequel ledit dispositif capteur (50) est positionné sur la surface intérieure (16) dudit pneu.

8.  Système de surveillance de pneu selon l'une des revendications 1 à 7, dans lequel ledit système affiche une alarme lorsque ledit rapport entre la durée de ladite impulsion électrique et la durée d'un tour de pneu obéit à une relation donnée.

9.  Système de surveillance de pneu selon l'une des revendications 1 à 8, dans lequel ledit dispositif capteur (50) est un extensomètre.

10. Système de surveillance de pneu selon l'une des revendications 1 à 8, dans lequel ledit dispositif capteur (50) est un accéléromètre.

*Fig. 1a*

*Fig. 1b*

SENSOR

CALCULATOR

TRANSMITTER

50

54

62

60

63

IN TIRE

IN VEHICLE

EVALUATING
UNIT

70

Fig. 2

Fig. 3